# EUROPÄISCHE PATENTSCHRIFT

(11) **EP 3 352 877 B1**
(45) Veröffentlichungstag und Bekanntmachung des Hinweises auf die Patenterteilung: **15.07.2020**
(21) Anmeldenummer: 16774450.7
(22) Anmeldetag: 22.09.2016
(51) Int. Cl.: B01D 35/00, B01D 35/26, B01D 36/00, F02M 37/00, F02M 37/16, F02M 37/22, B01D 35/147

(54) **FILTERVORRICHTUNG MIT PUMPE**
FILTER DEVICE WITH PUMP
DISPOSITIF FILTRANT AVEC POMPE

(30) Priorität: 25.09.2015 DE 102015012556
(43) Veröffentlichungstag der Anmeldung: 01.08.2018
(73) Patentinhaber: Hydac Fluidcarecenter GmbH, 66280 Sulzbach/Saar (DE)
(72) Erfinder: SCHOLL, Thomas, 66740 Saarlouis (DE); KREIBIG, Micha, 66663 Merzig-Brotdorf (DE)
(74) Vertreter: Bartels, Martin Erich Arthur
(86) Internationale Anmeldenummer: PCT/EP2016/001586
(87) Internationale Veröffentlichungsnummer: WO 2017/050432

(56) Entgegenhaltungen:
- EP-A2- 0 890 385
- DE-A1-102008 062 552
- DE-A1-102009 040 655
- DE-A1-102010 016 480
- DE-A1-102012 216 385
- GB-A- 1 157 187
- GB-A- 2 114 237

## Beschreibung

Die Erfindung betrifft eine Filtervorrichtung, insbesondere vorgesehen für den Einsatz bei Diesel-Kraftstoffen, mit den Merkmalen im Oberbegriff von Anspruch 1.

In Systemen zur Versorgung von Verbrauchern oder Abnehmern von Fluiden, wie flüssigen Kraftstoffen für den Betrieb von Verbrennungsmotoren, ist es Stand der Technik (DE 10 2009 008 676 A1), den zugehörigen Förderpumpen Filtervorrichtungen vorzuschalten, um die Betriebssicherheit gefährdende Schmutzstoffe zurückzuhalten. Bei Versorgungssystemen für Dieselmotoren ist üblicherweise in der Ansaugleitung für Dieselkraftstoff einer Vorförderpumpe eine Filtervorrichtung vorgeschaltet, die als Vorfilter die hauptsächliche Schmutzstoffbelastung einschließlich Wasser aus dem dem Tank zugeführten Kraftstoff entfernt, bevor die Vorförderpumpe den Kraftstoff über ein Feinfilter zur Einspritzpumpe weiterfördert, die Bestandteil des Injektorsystems, beispielsweise in Form eines Common-Rail-Systems, ist. Im Betrieb dieser Systeme ist das Filterelement der als Vorfilter die Hauptlast der Schmutzstoffe abreinigenden Filtervorrichtung nach entsprechenden Betriebszeiten auszuwechseln. Bei diesen mit zumindest teilweise entleertem Filtergehäuse stattfindenden Vorgängen wird Luft in das System eingebracht, die entfernt werden muss, um den Förderbetrieb der Vorförderpumpe zu gewährleisten. Im Stand der Technik werden hierzu Handpumpen eingesetzt, mit denen die Luft abgesaugt werden kann und die zusammen mit zugehörigen Ventileinrichtungen am betreffenden Filtergehäuse von außen her angeschlossen werden. Die Wartungsarbeiten, bei denen ein Filterelementwechsel durchgeführt werden muss, gestalten sich daher umständlich und zeitaufwendig.

Die DE 10 2009 040 655 A1 beschreibt eine gattungsgemäße Filtervorrichtung mit einem in einem Filtergehäuse austauschbar aufnehmbaren Filterelement, wobei eine Fluid-Pumpeneinrichtung mit zwei Pumpenkammern als Teil der Filtervorrichtung vorhanden ist, die mittels eines in diesen Kammern längsverfahrbar geführten Pumpenkolbens zumindest in einer seiner beiden Verfahrrichtungen fluiddicht voneinander separiert sind.

Die DE 102012 216 385 A1 offenbart eine Filtervorrichtung, insbesondere vorgesehen für den Einsatz bei Diesel-Kraftstoffen, mit einer Fluid-Pumpeneinrichtung, die einen längsverfahrbar geführten Pumpenkolben aufweist, wobei zwei Ventile vorgesehen sind, von denen jeweils das eine gegenläufig zum jeweils anderen Ventil bei Betätigen der Pumpeneinrichtung öffnet oder schließt.

Ausgehend von diesem Stand der Technik liegt der Erfindung die Aufgabe zugrunde, eine Filtervorrichtung der besagten Art zur Verfügung zu stellen, die sich durch eine besondere Wartungsfreundlichkeit auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 zeichnet sich die Erfindung dadurch aus, dass jeder Pumpenkammer zugeordnet ein Ventil vorgesehen ist, das gegenläufig zum jeweils anderen Ventil bei Betätigen der Pumpeneinrichtung öffnet oder schließt, und dass mindestens das eine Ventil Bestandteil des Filterelementes ist und in seiner geöffneten Stellung Fluid in seine zugeordnete Pumpenkammer weiterleitet und in seiner Schließstellung diesen Weg sperrt. Bei einem Filterelementwechsel mit einem damit verbundenen Eintrag von Luft in das Filtergehäuse wird diese dadurch bei der Tätigkeit der Pumpeneinrichtung über dieses geöffnete Ventil in die Pumpenkammer weitergeleitet.

Es ist ferner vorgesehen, dass die Filtervorrichtung eine Fluid-Pumpeneinrichtung mit zwei Pumpenkammern als Teil der Filtervorrichtung aufweist, die mittels eines in diesen Kammern längsverfahrbar geführten Pumpenkolbens zumindest in einer seiner beiden Verfahrrichtungen fluiddicht voneinander separiert sind, wobei jeder Pumpenkammer zugeordnet ein Ventil vorgesehen ist, das gegenläufig zum jeweils anderen Ventil bei Betätigen der Pumpeneinrichtung öffnet oder schließt. Somit ist die gesamte, zur Absaugung der eingebrachten Luft erforderliche Einrichtung, einschließlich der Pumpeneinrichtung und der zugeordneten Ventile, in die erfindungsgemäße Filtervorrichtung integriert. Dadurch, dass keine externen Einrichtungen zum Einsatz gebracht werden müssen und auch kein Arbeitsaufwand für den Anschluss der Einrichtungen anfällt, sind die mit einem Filterelementwechsel verbundenen Wartungsarbeiten schnell und sicher und damit kostengünstig ausführbar.

Die Pumpeneinrichtung ist permanenter Bestandteil der Filtervorrichtung, wobei ein Teil im Filtergehäuse mit dem zu tauschenden Filterelement angeordnet ist, und insbesondere der vorzugsweise von Hand zu betätigende Pumpenkolben, der die beiden Pumpenkammern unterteilt, ist auf der Deckelseite respektive der Kopfseite des Filtergehäuses angeordnet.

Mit besonderem Vorteil kann das andere, zweite Ventil Bestandteil des Filtergehäuses, insbesondere dessen Gehäusekopfes, sein, der in wieder lösbarer Weise auf einen Gehäusetopf mit dem aufnehmbaren Filterelement aufschraubbar ist, wobei dieses Ventil in seiner geöffneten Stellung Fluid in seine zugeordnete Pumpenkammer weiterleitet und in seiner Schließstellung diesen Weg sperrt. Wiederum, wie bei dem ersten Ventil, wird bei der Tätigkeit der Pumpeneinrichtung Luft, die beim Filterelementwechsel in das Gehäuse eingebracht ist, zusammen mit im Gehäuse befindlichem Kraftstoff in die zugeordnete Pumpenkammer weitergeleitet. Alternativ können auch beide Ventile Bestandteil des Filterelementes oder des Filtergehäuses sein.

Mit besonderem Vorteil kann die Anordnung so getroffen sein, dass der Pumpenkolben mit einer stangenartigen Betätigungseinrichtung verbunden ist, die, aus dem Filtergehäuse herausgeführt, mittels einer Handhabe das Verfahren des Pumpenkolbens in seinen beiden Pumpenkammern von Hand ermöglicht. Dadurch gestaltet sich der Vorgang der Luftabsaugung aus dem Filtergehäuse besonders einfach und bequem.

Diejenige Pumpenkammer, die an die Reinseite des Filterelements mittels des ersten Ventils anschließbar ist, kann einen Fluidanschluss für den Weitertransport des Fluids an eine Vorförderpumpe, vorzugsweise eines Diesel-Einspritzsystems, aufweisen. Die Pumpeneinrichtung bildet dadurch eine der Vorförderpumpe noch weiter vorgeschaltete Fördereinrichtung, die durch ihren Betrieb aus dem Filtergehäuse Luft und nach deren Abfuhr nachgesaugten Kraftstoff der Vorförderpumpe zuführt und diese im Zug der Pumpenbetätigung mit Kraftstoff befüllt, so dass ein sicheres Anlaufen der Vorförderpumpe und damit der sichere Neustart des Gesamt-Versorgungssystems gewährleistet ist.

Dabei kann die Anordnung mit Vorteil so getroffen sein, dass beim Durchfahren derjenigen Pumpenkammer, die Fluid von dem zweiten Ventil in seiner Offenstellung erhält, in Richtung seines sich verringernden Kammervolumens Fluid aus dieser Kammer über den Pumpenkolben in Richtung der anderen Pumpenkammer verdrängt ist. Dadurch ist diejenige Pumpenkammer, aus der bei einem Vorwärtshub des Pumpenkolbens das Fluid zur Vorförderpumpe hin verdrängt wird, beim Rückhub des Pumpenkolbens für den nächstfolgenden Vorwärts- oder Förderhub wieder befüllbar.

Für diese Befüllfunktion kann der Pumpenkolben entlang seines Außenumfangs einen elastisch nachgiebigen Rand aufweisen, der in der einen Verfahrrichtung des Pumpenkolbens Fluidströmung von der einen auf die andere Pumpenkammer zulässt und in der anderen Verfahrrichtung, also beim Förder- oder Vorwärtshub, diesen Verbindungsweg sperrt.

Bei vorteilhaften Ausführungsbeispielen weist das Ventil des Filterelements eine Ventilkugel auf, die, in einem Käfig mit Fluid-Durchlässen geführt, Teil einer Endkappe des Filterelements ist, die der zuordenbaren Pumpenkammer zugewandt ist. Dergestalt lässt sich dieses Ventil als Rückschlagventil in einfacher Bauweise realisieren.

Das andere Ventil kann vorteilhafterweise aus einem federbelasteten Rückschlagventil gebildet sein, dessen Ansaugkanal mit der Reinseite des Filterelements in Verbindung ist. Die Federbelastung ist hierbei derart eingestellt, dass dieses Ventil selbsttätig für nachströmendes Fluid öffnet, wenn sich der Pumpenkolben in der das Volumen der angeschlossenen Pumpenkammer vergrößernden Richtung bewegt.

Gemäß dem Patentanspruch 10 ist Gegenstand der Erfindung auch ein Versorgungssystem für einen Verbrennungsmotor, das eine Filtervorrichtung nach einem der Ansprüche 1 bis 9 aufweist. Ein derartiges Versorgungssystem ist mit besonderem Vorteil für die Versorgung von Dieselmotoren einsetzbar und insbesondere auch für stationäre Großdiesel geeignet.

Nachstehend ist die Erfindung anhand eines in der Zeichnung dargestellten Ausführungsbeispiels im Einzelnen erläutert. Es zeigen:
- Fig. 1: in Symboldarstellung die Fluidschaltung eines Kraftstoff-Versorgungssystems gemäß dem Stand der Technik;
- Fig. 2: eine teils horizontal aufgeschnitten und abgebrochen gezeichnete Draufsicht des Ausführungsbeispiels der erfindungsgemäßen Filtervorrichtung;
- Fig. 3: einen in größerem Maßstab und abgebrochen gezeichneten Längsschnitt des Gehäusekopfes des Filtergehäuses des Ausführungsbeispiels;
- Fig. 4: eine abgebrochen und teilweise im Vertikalschnitt und im Horizontalschnitt aufgeschnitten gezeichnete perspektivische Schrägansicht des Gehäusekopfes des Filtergehäuses des Ausführungsbeispiels mit zurückgezogenem Pumpenkolben der Pumpeneinrichtung;
- Fig. 5: eine im vertikalen Winkelschnitt gezeichnete, abgebrochene perspektivische Schrägansicht des Gehäusekopfes mit eingefahrenem Pumpenkolben der Pumpeneinrichtung; und
- Fig. 6: einen Längsschnitt des gesondert dargestellten Filterelements des Ausführungsbeispiels.

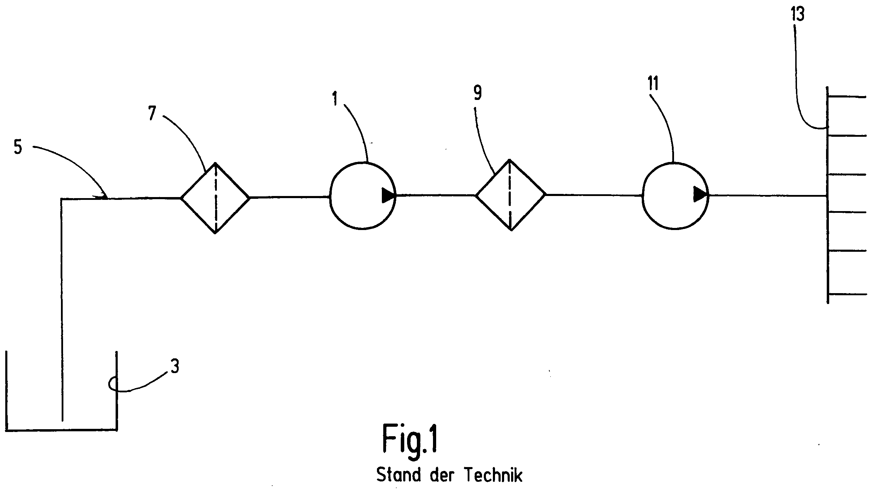

Die Fig. 1 zeigt ein übliches Versorgungssystem für die Kraftstoffversorgung eines Verbrennungsmotors, wobei eine Vorförderpumpe 1 Kraftstoff aus einem Kraftstofftank 3 über eine Ansaugleitung 5 ansaugt, in der ein der Vorförderpumpe 1 vorgeschaltetes Vorfilter 7 angeordnet ist. Von der Vorförderpumpe 1 gelangt der Kraftstoff zu einem Feinfilter 9, das einer Kraftstoffpumpe 11 vorgeschaltet ist, die ein Injektorsystem 13 versorgt, bei einem Dieselmotor beispielsweise in Form eines Common-Rail-Systems. Beim Betrieb derartiger Systeme muss zumindest beim Vorfilter 7 nach Ablauf entsprechender Betriebszeiten ein Filterelementwechsel durchgeführt werden, was den Eintrag einer erheblichen Luftmenge in das System zur Folge haben kann. Für die Fortsetzung des Betriebs nach erfolgtem Filterwechsel sind daher Entlüftungsmaßnahmen erforderlich, um für den Wiederbetrieb des Systems die eingebrachte Luft, die die Förderfunktion der Vorförderpumpe beeinträchtigen oder verhindern würde, aus dem System zu entfernen. Wie bereits erwähnt, werden üblicherweise hierzu Absaugeinrichtungen am Vorfilter 7 angeschlossen (nicht dargestellt) und in Betrieb gesetzt.

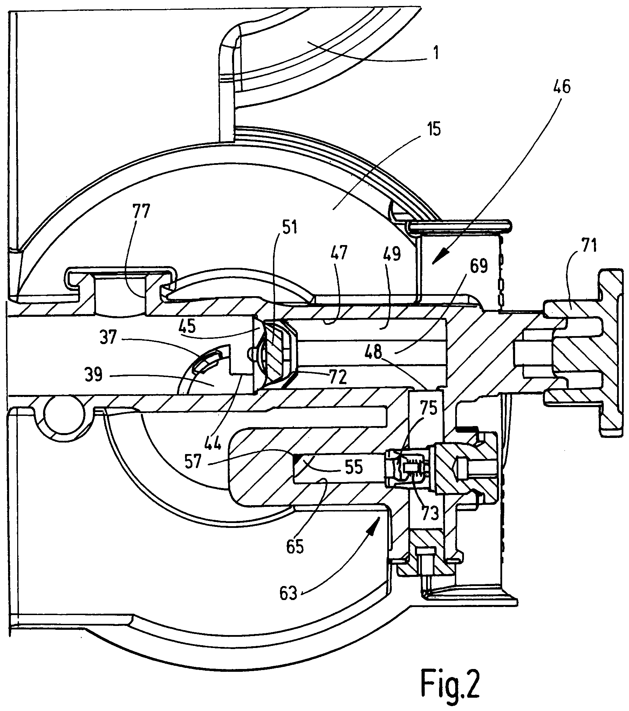

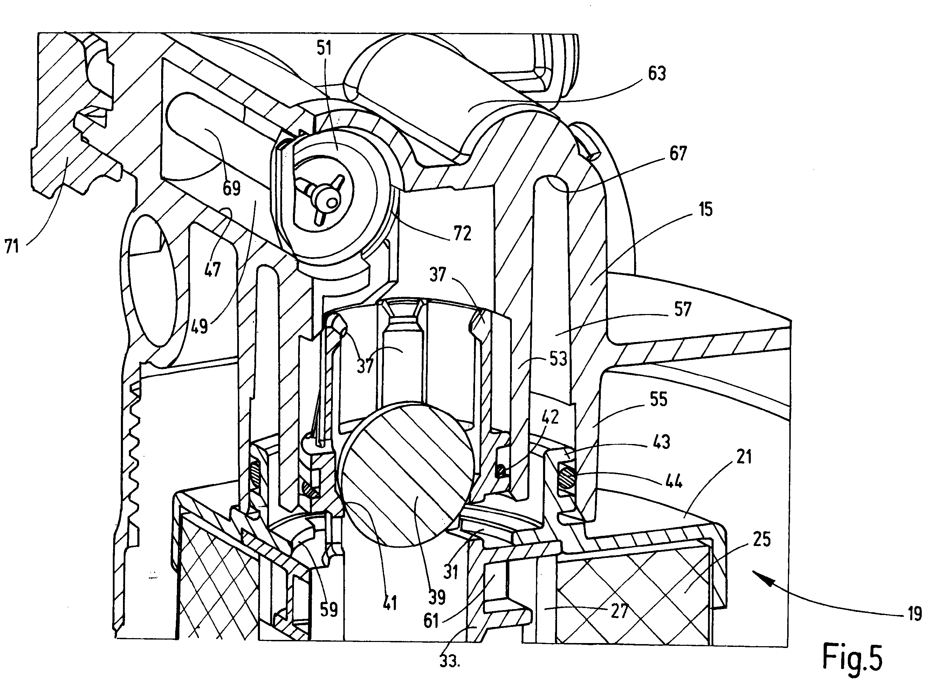

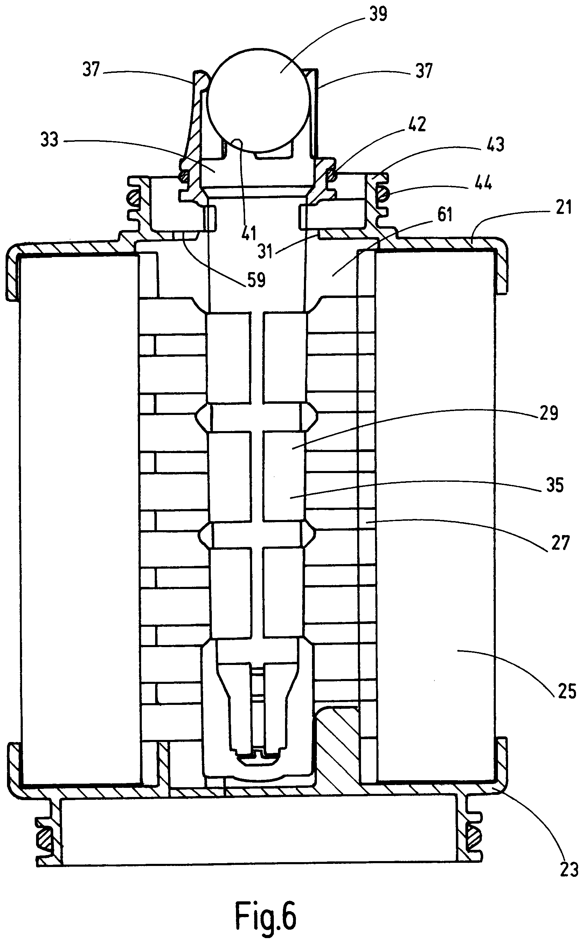

Bei der erfindungsgemäßen Vorrichtung, von der in Fig. 2 bis 6 ein Ausführungsbeispiel dargestellt ist, ist eine Absaugeinrichtung in den Gehäusekopf 15 integriert, der als fluiddichter Verschluss auf einen in den Figuren nicht dargestellten Filtertopf aufschraubbar ist. Dieser ist in der bei derartigen Filtervorrichtungen üblichen Bauweise ausgebildet und nimmt ein Filterelement 19 auf, das in Fig. 6 gesondert dargestellt ist und nach Abschrauben des Gehäusekopfes 15 aus dem Gehäusetopf 16 zur Auswechslung entnehmbar ist. Das Filterelement 19 weist in üblicher Weise zwischen oberer Endkappe 21 und unterer Endkappe 23 ein Filtermedium 25, beim Ausführungsbeispiel in Form eines einen Hohlzylinder bildenden Meshpacks, auf, das als Koaleszer-Einrichtung dient, die bei im Dieselöl enthaltenen Wasseranteile die Bildung von Tropfen begünstigt, die im inneren Hohlraum 29 absinken und an der offenen unteren Endkappe 23 einen Sumpf bilden, der von dort aus nach außen abgeführt werden kann. Ein fluiddurchlässiges Stützrohr 27, das an der Innenseite des Filtermediums 25 anliegt, umgibt den inneren Filterhohlraum 29, der im Betrieb bei der von der Außenseite des Filtermediums 25 her nach innen erfolgenden Durchströmung die Reinseite bildet. In der zentralen Öffnung 31 der oberen Endkappe 21 sitzt ein hohler Haltekörper 33 für eine wasserabweisende (hydrophobe) Sperrschicht 35 (Fig. 6). Insbesondere erfolgt ein Sinken aus dem Element 19 in den Wassersammelraum des Gehäusetopfes 16.

Der an der oberen Endkappe 21 festgelegte hohle Haltekörper 33, der den Ausgang aus dem die Reinseite bildenden inneren Hohlraum 29 bildet, weist einen Kranz nach oben ragender Finger 37 auf, die für eine Ventilkugel 39 eine Art Käfig bilden. Außerdem ist für die Ventilkugel 39 im Durchgang des Haltekörpers ein Ventilsitz 41 gebildet. Am Übergang zu den Haltefingern 37, etwa auf Höhe des Ventilsitzes 41, befindet sich an der Außenseite des Haltekörpers 33 ein O-Ring 42. In einem radialen Abstand hierzu befindet sich an der oberen Endkappe 21 ein kreisringförmiger, nach oben ragender Fortsatz 43, in dem ein weiterer O-Ring 44 aufgenommen ist.

Die Fig. 2, 4 und 5 zeigen das durch die Ventilkugel 39 und den Ventilsitz 41 gebildete Rückschlagventil, hier als das erste Ventil bezeichnet, jeweils in geschlossener Stellung, bei der die Fluidverbindung zwischen dem reinseitigen, inneren Filterhohlraum 29 und einem Einlass 44 an einer ersten Pumpenkammer 45 einer Pumpeneinrichtung 46 gesperrt ist. Diese weist an ihrem Pumpenzylinder 47 einen Einlass 48 zu einer zweiten Pumpenkammer 49 auf. Der Pumpenzylinder 47 mit einem darin zwischen den Pumpenkammern 45 und 49 verfahrbaren Pumpenkolben 51 ist mit horizontaler Zylinderachse im Gehäusekopf 15 oberhalb des Filterelements 19 angeordnet.

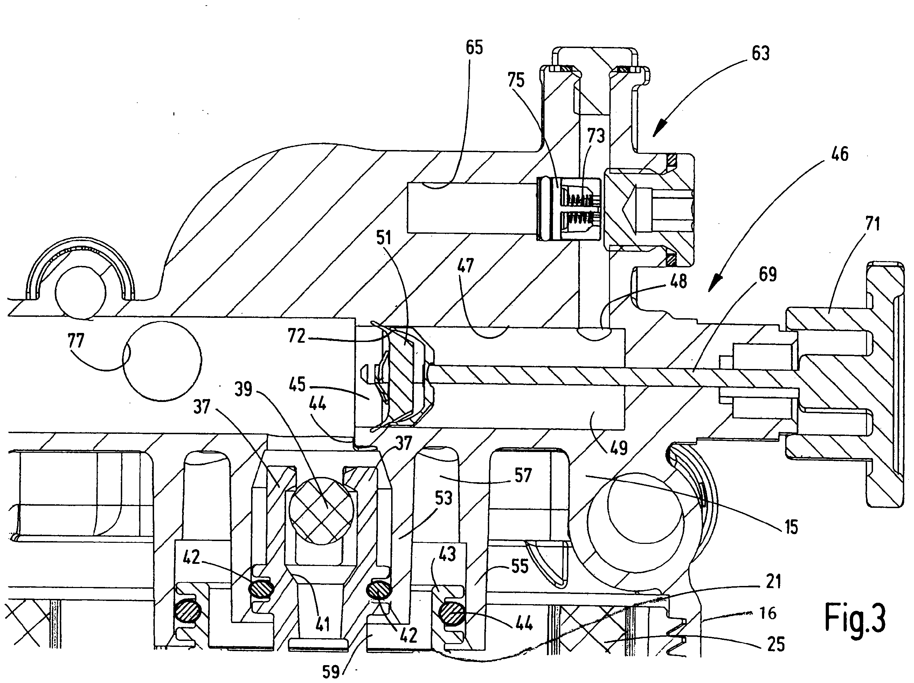

Der Gehäusekopf 15 weist als Aufnahme für das Filterelement 19 und zur Bildung von Fluidverbindungen zwei zur Längsachse des Filterelements 19 koaxiale und zueinander konzentrische Hohlzylinder auf, die an dem der Endkappe 21 des Filterelements 19 zugewandten Seite offen sind. Der innere Hohlzylinder ist mit 53 bezeichnet und der ihn im radialen Abstand umgebende äußere Hohlzylinder ist mit 55 bezeichnet. Bei in Funktionsposition eingesetztem Filterelement 19 bildet der O-Ring 42 zwischen dem Haltekörper 33 und der Innenwand des inneren Hohlzylinders 53 die Abdichtung einer Fluidverbindung, die bei geöffnetem Ventil, d.h. bei vom Ventilsitz 41 abgehobener Ventilkugel 39, wie dies in Fig. 3 gezeigt ist, von der Innenseite des Siebrohres 35 her zum Einlass 44 der ersten Pumpenkammer 45 führt. Der radial weiter außen liegende O-Ring 44 bildet die Abdichtung zwischen dem Fortsatz 43 der Endkappe 21 und der Innenseite des äußeren Hohlzylinders 55. Dadurch ist eine zweite abgedichtete Fluidverbindung zwischen dem zwischen innerem Hohlzylinder und äußerem Hohlzylinder gelegenen Ringraum 57 über einen Durchlass 59 der Endkappe 21 zum reinseitigen Raum 61 zwischen dem Stützrohr 27 und dem Siebrohr 35 gebildet. Die Fig. 2 und 3 zeigen, dass im Gehäusekopf 15 ein zweites Ventil 63 oberhalb des Pumpenzylinders 47 derart angeordnet ist, dass sein Einlass 65 das obere Ende 67 des reinseitigen Ringraums 57 übergreift, so dass, s. Fig. 2, eine Fluidverbindung von der Reinseite her zum Einlass 65 des zweiten Ventils 63 gebildet ist.

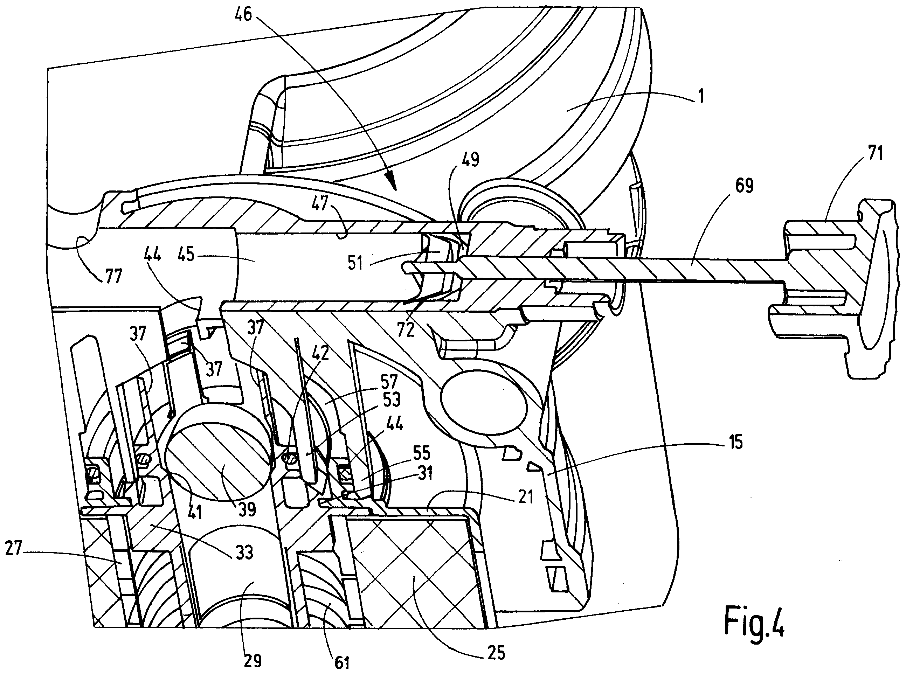

Der Pumpenkolben 51 ist mittels eines an seiner Kolbenstange 69 angebrachten Handgriffs 71 manuell im Pumpenzylinder 47 zwischen erster Pumpenkammer 45 und zweiter Pumpenkammer 49 verfahrbar. Der Pumpenkolben 51 weist am Kolbenumfang einen elastisch nachgiebigen Rand 72 auf, der in der Art einer Membran beim Einfahren in die in Fig. 2, 3 und 5 gezeigte Position, bei der das Volumen der ersten Pumpenkammer 45 verringert und das Volumen der zweiten Pumpenkammer 49 vergrößert wird, eine fluiddichte Abdichtung an der Innenwand des Pumpenzylinders 47 bildet, beim Zurückziehen in die in Fig. 4 gezeigte Position jedoch das Überströmen des Pumpenkolbens 51 zulässt, so dass Fluid, das sich in der zweiten Pumpenkammer 49 befindet, beim Verringern von deren Volumen zur ersten Pumpenkammer 45 gelangt. Das zweite Ventil 63 ist ein Rückschlagventil mit durch eine Druckfeder 73 belastetem Ventilkörper 75, das für den Fluiddurchgang vom Einlass 65 zur zweiten Pumpenkammer 49 über deren Einlass 48 hin druckbetätigt öffnet.

Beim Betrieb der Pumpeneinrichtung 46 bei dem Zurückziehen des Pumpenkolbens 51 aus der in Fig. 2, 3 und 5 gezeigten Position in die in Fig. 4 gezeigte Position, wobei das Volumen der ersten Pumpenkammer 45 vergrößert wird, öffnet das erste Ventil durch Abheben der Ventilkugel 39, s. Fig. 3, wo der Beginn der Rückfahrbewegung dargestellt ist. Dabei strömt aus dem Filterelement 19 über den Einlass 44 Fluid, d.h. Luft und verbliebener Kraftstoff, aus dem Filterelement 19 aus. Gleichzeitig gelangt in der zweiten Pumpenkammer 49 befindliches Fluid durch Überströmen des Pumpenkolbens 51 zur ersten Pumpenkammer 45 hin, weil bei der Rückfahrbewegung das zweite Ventil 63 geschlossen ist. Bei einem anschließenden Einschieben des Kolbens 51 aus der in Fig. 4 gezeigten Position, schließt die Ventilkugel 39 des ersten Ventils und das gesamte in der ersten Pumpenkammer 45 angesammelte Fluid wird über einen Ausgang 77 zur Vorförderpumpe 1 hin ausgeschoben. Gleichzeitig öffnet bei dieser Kolbenbewegung das zweite Ventil 63, so dass über dessen Einlass 65 Fluid über den Raum 57 aus der Reinseite nachströmt. Bei wiederholtem Arbeitsspiel mit weiterer Betätigung der Pumpeneinrichtung 46 wird sowohl Luft aus dem Filtergehäuse entfernt als auch gegebenenfalls vorhandener, nachströmender Kraftstoff zur nachgeschalteten Vorförderpumpe 1 transportiert, so dass die sichere Funktion nach erfolgtem Filterelementwechsel gewährleistet ist.

## Patentansprüche

1. Filtervorrichtung, insbesondere vorgesehen für den Einsatz bei Diesel-Kraftstoffen, mit einem in einem Filtergehäuse austauschbar aufnehmbaren Filterelement (19), wobei eine Fluid-Pumpeneinrichtung (46) mit zwei Pumpenkammern (45, 49) als Teil der Filtervorrichtung vorhanden ist, die mittels eines in diesen Kammern längsverfahrbar geführten Pumpenkolbens (51) zumindest in einer seiner beiden Verfahrrichtungen fluiddicht voneinander separiert sind, **dadurch gekennzeichnet, dass** jeder Pumpenkammer (45, 49) zugeordnet ein Ventil (39, 63) vorgesehen ist, das gegenläufig zum jeweils anderen Ventil (39, 63) bei Betätigen der Pumpeneinrichtung (46) öffnet oder schließt, und dass mindestens das eine Ventil (39) Bestandteil des Filterelementes (19) ist und in seiner geöffneten Stellung Fluid in seine zugeordnete Pumpenkammer (45) weiterleitet und in seiner Schließstellung diesen Weg sperrt.

2. Filtervorrichtung nach Anspruch 1, **dadurch gekennzeichnet, dass** das andere Ventil (63) Bestandteil des Filtergehäuses ist, insbesondere eines Gehäusekopfes (15), der in wieder lösbarer Weise auf einen Gehäusetopf (16) mit dem aufnehmbaren Filterelement (19) aufschraubbar ist, und dass das andere Ventil (63) in seiner geöffneten Stellung Fluid in seine zugeordnete Pumpenkammer (49) weiterleitet und in seiner Schließstellung diesen Weg sperrt oder dass beide Ventile (39, 63) Bestandteil des Filterelementes (19) sind.

3. Filtervorrichtung nach Anspruch 1 oder 2, **dadurch gekennzeichnet, dass** der Pumpenkolben (51) mit einer stangenartigen Betätigungseinrichtung (69) verbunden ist, die aus dem Filtergehäuse herausgeführt, mittels einer Handhabe (71) das Verfahren des Pumpenkolbens (51) in seinen beiden Pumpenkammern (45, 49) von Hand ermöglicht.

4. Filtervorrichtung nach einem der vorstehenden Ansprüche, **dadurch gekennzeichnet, dass** diejenige Pumpenkammer (45), die an die Reinseite (29) des Filterelements (19) mittels des einen Ventils (39) anschließbar ist, einen Fluidanschluss (77) für den Weitertransport des Fluids an eine Vorförderpumpe (1), vorzugsweise eines Diesel-Einspritzsystems, aufweist.

5. Filtervorrichtung nach einem der vorstehenden Ansprüche, **dadurch gekennzeichnet, dass** beim Durchfahren derjenigen Pumpenkammer (49), die Fluid von dem anderen Ventil (63) in seiner Offenstellung erhält, in Richtung seines sich verringernden Kammervolumens Fluid aus dieser Kammer (49) über den Pumpenkolben (51) in Richtung der anderen Pumpenkammer (45) verdrängt ist.

6. Filtervorrichtung nach einem der vorstehenden Ansprüche, **dadurch gekennzeichnet, dass** der Pumpenkolben (51) entlang seines Außenumfanges einen elastisch nachgiebigen Rand (72) aufweist, der in der einen Verfahrrichtung des Pumpenkolbens (51) Fluidströmung von der einen (49) in die andere Pumpenkammer (45) zulässt und in der anderen Verfahrrichtung diesen Verbindungsweg sperrt.

7. Filtervorrichtung nach einem der vorstehenden Ansprüche, **dadurch gekennzeichnet, dass** das Ventil des Filterelementes (19) eine Ventilkugel (39) aufweist, die, in einem Käfig (37) mit Fluid-Durchlässen geführt, Teil einer Endkappe (21) des Filterelementes (19) ist, die der zuordenbaren Pumpenkammer (45) zugewandt ist.

8. Filtervorrichtung nach einem der vorstehenden Ansprüche, **dadurch gekennzeichnet, dass** das andere Ventil (63) aus einem federbelasteten Rückschlagventil (73, 75) gebildet ist, dessen Ansaugkanal (65) mit der Reinseite (57) des Filterelementes (19) in Verbindung ist.

9. Versorgungssystem für einen Verbrennungsmotor mit einem Fluid mit einer vorgeschalteten Vor- (1) und Hauptförderpumpe (11), **dadurch gekennzeichnet, dass**, in Fluidförderrichtung gesehen, der Vorförderpumpe (1) eine Filtervorrichtung (19, 46) nach einem der vorstehenden Ansprüche vorgeschaltet ist.

## Claims

1. Filter device, especially intended for use with diesel fuels, having an exchangeable filter element (19) that can be mounted in a filter housing, wherein a fluid pump device (46) with two pump chambers (45, 49) is provided as part of the filter device, said pump chambers being separated from one another in a fluid-tight manner by means of a pump piston (51) mounted such that it can be displaced longitudinally in these chambers at least in one of its two directions of travel, **characterised in that** each pump chamber (45, 49) is provided with an assigned valve (39, 63), which opens or closes in the opposite direction to the respective other valve (39, 63) when the pump device (46) is actuated, and **in that** at least the one valve (39) is part of the filter element (19) and conveys fluid into its assigned pump chamber (45) in its open position and blocks this route in its closed position.

2. Filter device according to claim 1, **characterised in that** the other valve (63) is part of the filter housing, particularly a housing head (15), which can be screwed in a detachable manner onto a housing pot (16) with the mountable filter element (19), and **in that** the other valve (63) conveys fluid into its assigned pump chamber (49) in its open position and blocks this route in its closed position, or **in that** both valves (39, 63) form part of the filter element (19).

3. Filter device according to either claim 1 or claim 2, **characterised in that** the pump piston (51) is connected to a rod-like actuating device (69), which leads from the filter housing and facilitates the displacement of the pump piston (51) in its two pump chambers (45, 49) by hand by means of a handle (71).

4. Filter device according to any one of the preceding claims, **characterised in that** the pump chamber (45) that can be connected to the clean side (29) of the filter element (19) by means of the one valve (39) comprises a fluid connection (77) for onward transfer of the fluid to a preliminary feed pump (1), preferably a diesel injection system.

5. Filter device according to any one of the preceding claims, **characterised in that**, when passing through the pump chamber (49) that receives fluid from the other valve (63) in its open position, fluid is displaced from this chamber (49) via the pump piston (51) towards the other pump chamber (45) in the direction of its reducing chamber volume.

6. Filter device according to any one of the preceding claims, **characterised in that** the pump piston (51) comprises an elastically flexible edge (72) along its outer circumference, said edge allowing fluid to flow from one (49) pump chamber to the other (45) in one direction of travel of the pump piston (51) and blocking this connecting route in the other direction of travel.

7. Filter device according to any one of the preceding claims, **characterised in that** the valve of the filter element (19) comprises a valve ball (39), which, mounted in a cage (37) with fluid passages, forms part of an end cap (21) of the filter element (19), said cap facing the associated pump chamber (45).

8. Filter device according to any one of the preceding claims, **characterised in that** the other valve (63) is formed by a spring-loaded non-return valve (73, 75) with a suction channel (65) connected to the clean side (57) of the filter element (19).

9. Supply system for a combustion engine with a fluid having an upstream preliminary (1) and main feed pump (11), **characterised in that** the preliminary feed pump (1) is connected upstream of a filter device (19, 46) when viewed in the fluid conveying direction according to any one of the preceding claims.

## Revendications

1. Installation de filtration prévue notamment pour être utilisée pour des carburants diesel, comprenant un élément (19) de filtre pouvant être reçu de manière remplaçable dans une enveloppe de filtre, dans laquelle il y a un dispositif (46) de pompage de fluide ayant deux chambres (45, 49) de pompe comme partie de l'installation de filtration, qui, au moyen d'un piston (51) de pompe, guidé avec possibilité de se déplacer longitudinalement dans ces chambres, sont séparées l'une de l'autre d'une manière étanche au fluide, au moins dans l'un de ses deux sens de déplacement, **caractérisée en ce qu'**à chaque chambre (45, 49) de pompe est associée une soupape (39, 63), qui, en sens contraire à l'autre soupape (39, 63), s'ouvre ou se ferme lors de l'actionnement du dispositif (46) de pompage, et **en ce qu'**au moins l'une des soupapes (39) fait partie de l'élément (19) de filtre et, dans sa position ouverte, achemine du fluide dans sa chambre (46) de pompe associée et barre ce chemin dans sa position de fermeture.

2. Installation de filtration suivant la revendication 1, **caractérisée en ce que** l'autre soupape (63) fait partie de l'enveloppe du filtre, en étant notamment une tête (15) d'enveloppe, qui, d'une manière redétachable, peut être vissée sur un pot (16) d'enveloppe avec l'élément (19) de filtre pouvant y être reçu, et **en ce que** l'autre soupape (63) achemine, dans sa position ouverte, du fluide dans sa chambre (49) de pompe associée et bloque ce chemin dans sa position fermée ou **en ce que** les deux soupapes (39, 63) font partie de l'élément (19) de filtre.

3. Installation de filtration suivant la revendication 1 ou 2, **caractérisée en ce que** le piston (51) de pompe est relié à un dispositif (69) d'actionnement de type à tige, qui, guidé en dehors de l'enveloppe du filtre, rend possible, au moyen d'une poignée (71), de déplacer à la main le piston (51) de la pompe dans ses deux chambres (45, 49) de pompe.

4. Installation de filtration suivant l'une des revendications précédentes, **caractérisée en ce que** la chambre (45) de pompe, qui peut être raccordée au côté (29) propre de l'élément (19) de filtre, au moyen de la une soupape (39), a un raccord (77) pour du fluide pour l'acheminement du fluide à une pompe (1) de prérefoulement, de préférence d'un système d'injection diesel.

5. Installation de filtration suivant l'une des revendications précédentes, **caractérisée en ce que**, à la traversée de la chambre (49) de pompe, qui reçoit du fluide de l'autre soupape (63) dans sa position ouverte, dans le sens de son volume de chambre diminuant, du fluide est refoulé de cette chambre (49) par le piston (51) de pompe en direction de l'autre chambre (45) de la pompe.

6. Installation de filtration suivant l'une des revendications précédentes, **caractérisée en ce que** le piston (51) de la pompe a, le long de son pourtour extérieur, un bord (72) cédant élastiquement, qui, dans un sens de déplacement du piston (51) de la pompe, autorise un courant de fluide de l'une à l'autre chambre (45) de la pompe et, dans l'autre sens de déplacement, barre ce chemin de communication.

7. Installation de filtration suivant l'une des revendications précédentes, **caractérisée en ce que** la soupape de l'élément (19) de filtre est une bille (39) de soupape, qui, guidée dans une cage (37) ayant des passages pour du fluide, fait partie d'une coiffe (21) d'extrémité de l'élément (19) de filtre, qui est tournée vers la chambre (45) de la pompe pouvant être associée.

8. Installation de filtration suivant l'une des revendications précédentes, **caractérisée en ce que** l'autre soupape (63) est formée d'un clapet (73, 75) antiretour, qui est soumis à l'action d'un ressort et dont le conduit (65) d'aspiration communique avec le côté (57) propre de l'élément (19) de filtre.

9. Système d'alimentation en fluide d'un moteur à combustion, comprenant une pompe (1) de prérefoulement montée avant et une pompe (11) de refoulement principale, **caractérisé en ce que**, dans le sens de refoulement du fluide, il est monté, avant la pompe (1) de prérefoulement, une installation (19, 46) de filtration suivant l'une des revendications précédentes.
